# EUROPEAN PATENT APPLICATION

(11) **EP 3 809 376 A2**
(43) Date of publication of application: **21.04.2021**
(21) Application number: 20199114.8
(22) Date of filing: 29.09.2020
(51) Int. Cl.: G06T 15/08, G06T 7/00, G06T 19/00

(54) **SYSTEMS AND METHODS FOR VISUALIZING ANATOMICAL STRUCTURES**

(30) Priority: 15.10.2019 US 201916653900
(71) Applicant: GE Precision Healthcare LLC, Wauwatosa, WI 53226 (US)
(72) Inventor: KNOPLIOCH, Jerome, 78533 Buc (FR); PRUVOT, Celine, 78533 Buc (FR); EL HANCHI EL AMRANI, Faycal, 78533 Buc (FR); ROLLAND, David, 78533 Buc (FR); CARDON, Cyril, 78533 Buc (FR); GOGIN, Nicolas, 78533 Buc (FR)
(74) Representative: Fennell, Gareth Charles

(57) **Abstract**

Methods and systems are provided for medical imaging systems. In one embodiment, a method comprises acquiring three-dimensional image data with a three-dimensional imaging modality, generating an image of an anatomical structure within the three-dimensional image data with an angled portion of the anatomical structure rendered as at least partially transparent in the image, and displaying, via a display device, the image to a user. In this way, a three-dimensional anatomical structure, such as a vessel, may be visualized such that a user may view the inner wall without distortion.

## Description

### FIELD

Embodiments of the subject matter disclosed herein relate to medical imaging systems, and more particularly, to visualizing interiors of anatomical structures with medical imaging systems.

### BACKGROUND

Non-invasive imaging technologies allow images of the internal structures of a patient or object to be obtained without performing an invasive procedure on the patient or object. In particular, technologies such as computed tomography (CT) use various physical principles, such as the differential transmission of x-rays through the target volume, to acquire image data and to construct tomographic images (e.g., three-dimensional representations of the interior of the human body or of other imaged structures).

### BRIEF DESCRIPTION

In one embodiment, a method comprises acquiring three-dimensional image data with a three-dimensional imaging modality, generating an image of an anatomical structure within the three-dimensional image data with an angled portion of the anatomical structure rendered as at least partially transparent in the image, and displaying, via a display device, the image to a user. In this way, a three-dimensional anatomical structure, such as a vessel, may be visualized such that a user may view the inner wall without distortion.

It should be understood that the brief description above is provided to introduce in simplified form a selection of concepts that are further described in the detailed description. It is not meant to identify key or essential features of the claimed subject matter, the scope of which is defined uniquely by the claims that follow the detailed description. Furthermore, the claimed subject matter is not limited to implementations that solve any disadvantages noted above or in any part of this disclosure.

### BRIEF DESCRIPTION OF THE DRAWINGS

The patent or application file contains at least one drawing executed in color. Copies of this patent or patent application publication with color drawings will be provided by the Office upon request and payment of the necessary fee.

The present invention will be better understood from reading the following description of non-limiting embodiments, with reference to the attached drawings, wherein below:
FIG. 1 shows a pictorial view of an imaging system according to an embodiment;
FIG. 2 shows a block schematic diagram of an exemplary imaging system according to an embodiment;
FIG. 3 shows a block diagram illustrating an example rendering engine for visualizing anatomical structures according to an embodiment;
FIG. 4 shows a diagram illustrating a center line of an anatomical structure according to an embodiment;
FIG. 5 shows a diagram illustrating a cut mask applied to an anatomical structure according to an embodiment;
FIG. 6 shows a block diagram for volume rendering of an anatomical structure according to an embodiment;
FIG. 7 shows an example image of a vessel with volume rendering according to an embodiment;
FIG. 8 shows a block diagram for volume rendering of an anatomical structure with a cutaway view according to an embodiment;
FIG. 9 shows an example image of a vessel with a cut mask applied according to an embodiment;
FIG. 10 shows an example image of a vessel with a cut mask applied to depict an interior of the vessel according to an embodiment;
FIG. 11 shows an example image of a vessel rendered with Hounsfield units and with a cut mask applied to depict an interior of the vessel according to an embodiment; and
FIG. 12 shows a high-level flow chart illustrating an example method for visualizing interiors of an anatomical structure according to an embodiment.

### DETAILED DESCRIPTION

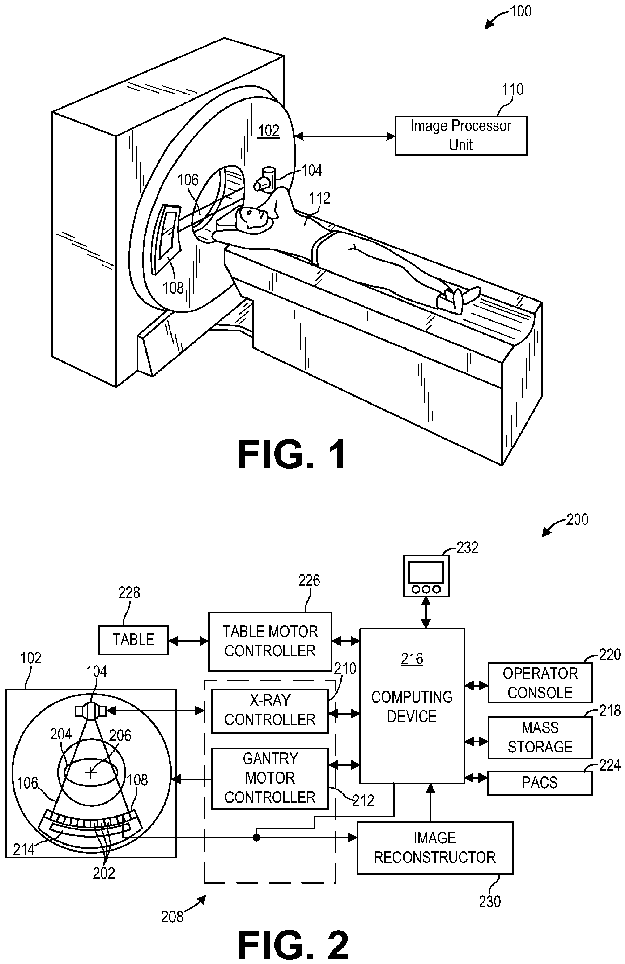

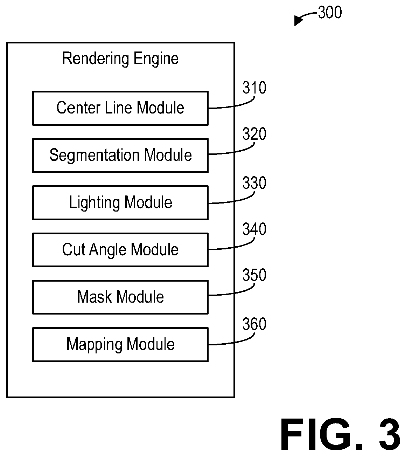

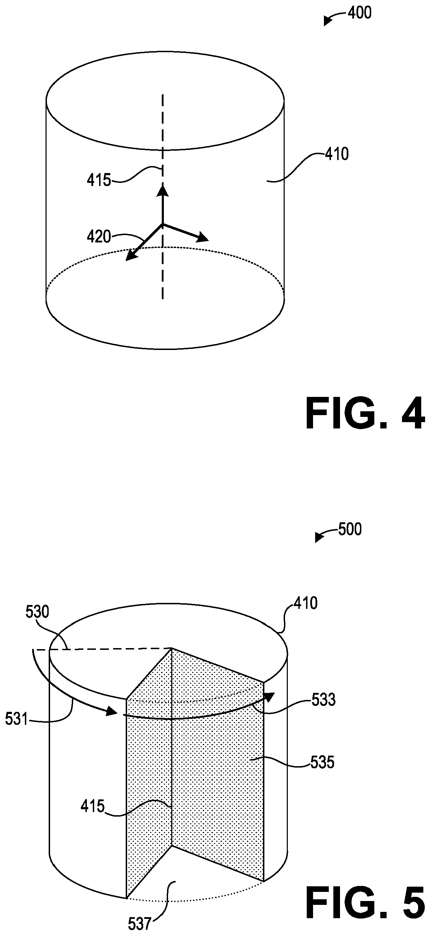

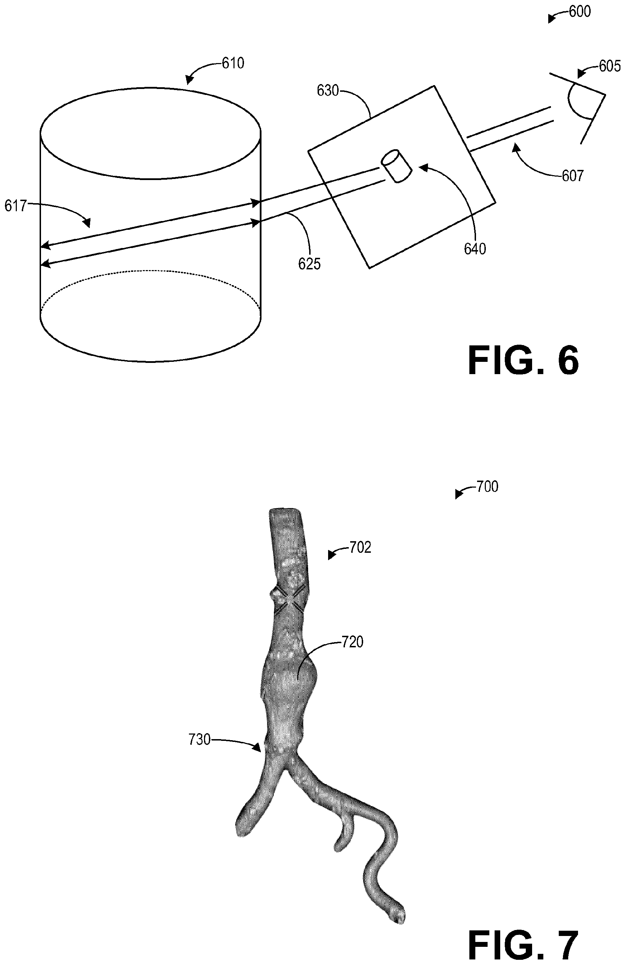

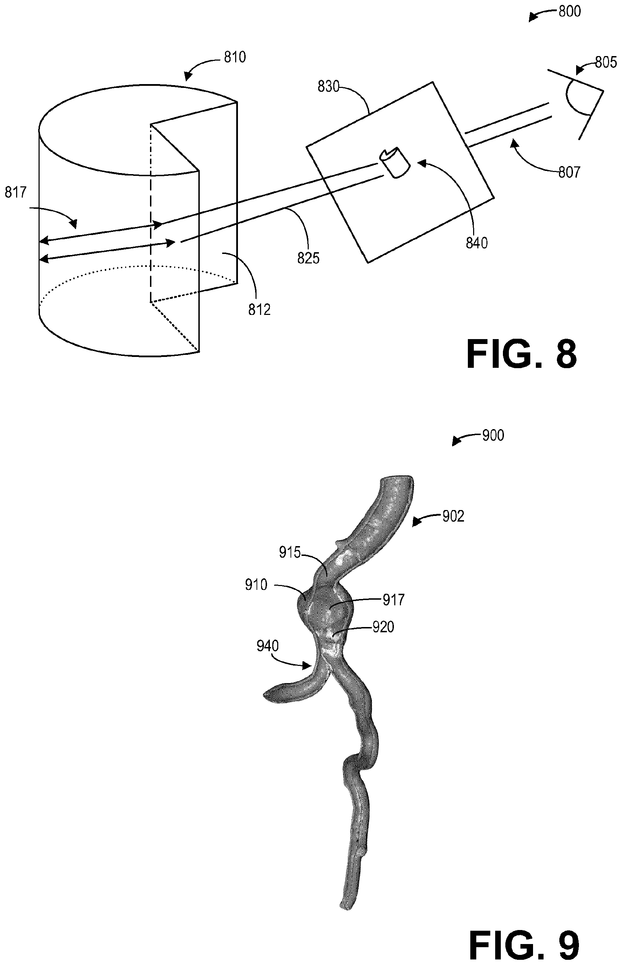

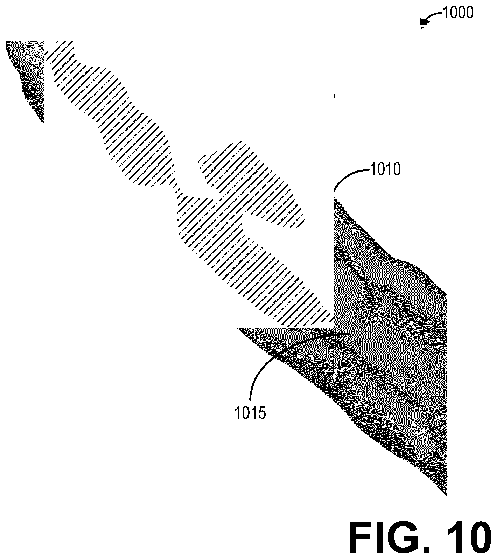

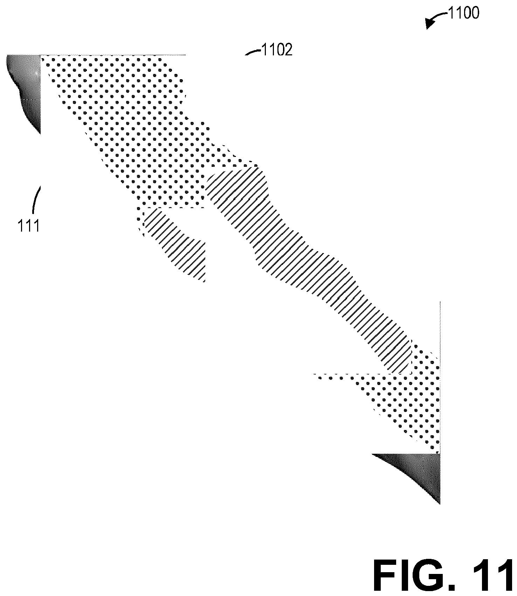

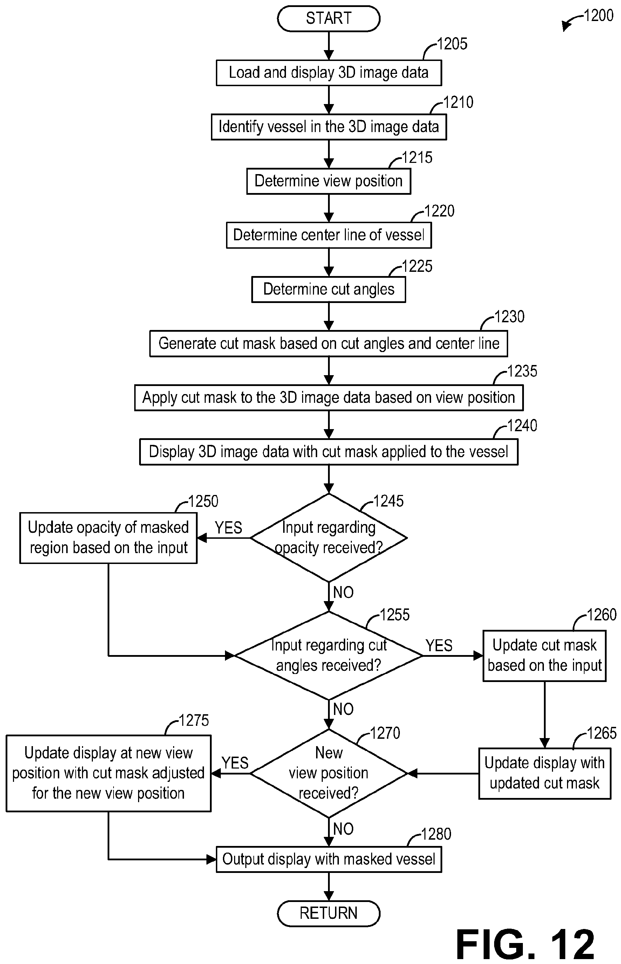

The following description relates to various embodiments of medical imaging systems. In particular, systems and methods are provided for powering computed tomography (CT) imaging systems. An example of a CT imaging system that may be used to acquire images in accordance with the present techniques is provided in FIGS. 1 and 2. The imaging system may be configured with a rendering engine, such as the rendering engine depicted in FIG. 3, that is capable of generating realistic and immersive three-dimensional images of anatomical structures such as vessels or organs. In particular, the rendering engine may virtually apply a chamfer cut, as depicted in FIGS. 4 and 5, to a vessel, such that the vessel is visualized with a cutaway portion. For standard volume rendering, as depicted in FIGS. 6 and 7, only the exterior surfaces of a vessel may be visualized. In such views, only the outer lumen is shown, and pathologies such as plaque inside the vessel are not visible. While multiplanar reformatted renderings may provide a visualization of the inside of a vessel, such reformatted views are limited to a single surface along the vessel. As such, a person observing the reformatted views cannot assess the size (e.g., depth, width, length) of the pathology and may not accurately observe the pathology. Furthermore, since a curved reformation is applied, the actual shape of the vessel is distorted. Furthermore, such reformatted views are limited to a single vessel at a time. Consequently, the topology of the pathology at a bifurcation of the vessel, for example, cannot be assessed. The technique of rendering images of anatomical structures such as vessels, as depicted in FIGS. 8 and 9, allows the interior of the vessel to be visualized with the natural shape of the vessel. Further, multiple vessels may be visualized, and both the outer lumen and inner lesions may be viewed in a single image. The interior view of the vessel may be photorealistic, as depicted in FIG. 10, or may be visualized according to Hounsfield units, as depicted in FIG. 11. A method for visualizing anatomical structures with chamfer cuts, as depicted in FIG. 12, includes applying a cut mask to a vessel within three-dimensional image data, and furthermore enables the user to adjust opacity, the size or angle of the chamfer cut, the rotation of the chamfer cut or the view, and so on.

Though a CT system is described by way of example, it should be understood that the present techniques may also be useful when applied to other imaging modalities, such as MRI, PET, ultrasound, C-arm angiography, and so forth. The present discussion of a CT imaging modality is provided merely as an example of one suitable imaging modality.

FIG. 1 illustrates an exemplary CT system 100 configured for CT imaging. Particularly, the CT system 100 is configured to image a subject 112 such as a patient, an inanimate object, one or more manufactured parts, and/or foreign objects such as dental implants, stents, and/or contrast agents present within the body. In one embodiment, the CT system 100 includes a gantry 102, which in turn, may further include at least one x-ray source 104 configured to project a beam of x-ray radiation 106 for use in imaging the subject 112. Specifically, the x-ray source 104 is configured to project the x-rays 106 towards a detector array 108 positioned on the opposite side of the gantry 102. Although FIG. 1 depicts only a single x-ray source 104, in certain embodiments, multiple x-ray radiation sources and detectors may be employed to project a plurality of x-rays 106 for acquiring projection data corresponding to the patient at different energy levels. In some embodiments, the x-ray source 104 may enable dual-energy gemstone spectral imaging (GSI) by rapid kVp switching. In some embodiments, the x-ray detector employed is a photon-counting detector which is capable of differentiating x-ray photons of different energies. In other embodiments, two sets of x-ray tube-detectors are used to generate dual-energy projections, with one set at low-kVp and the other at high-kVp. It should thus be appreciated that the methods described herein may be implemented with single energy acquisition techniques as well as dual energy acquisition techniques.

In certain embodiments, the CT system 100 further includes an image processor unit 110 configured to reconstruct images of a target volume of the subject 112 using an iterative or analytic image reconstruction method. For example, the image processor unit 110 may use an analytic image reconstruction approach such as filtered backprojection (FBP) to reconstruct images of a target volume of the patient. As another example, the image processor unit 110 may use an iterative image reconstruction approach such as advanced statistical iterative reconstruction (ASIR), conjugate gradient (CG), maximum likelihood expectation maximization (MLEM), model-based iterative reconstruction (MBIR), and so on to reconstruct images of a target volume of the subject 112. As described further herein, in some examples the image processor unit 110 may use both an analytic image reconstruction approach such as FBP in addition to an iterative image reconstruction approach.

In some known CT imaging system configurations, a radiation source projects a cone-shaped beam which is collimated to lie within an X-Y-Z plane of a Cartesian coordinate system and generally referred to as an "imaging plane." The radiation beam passes through an object being imaged, such as the patient or subject 112. The beam, after being attenuated by the object, impinges upon an array of radiation detectors. The intensity of the attenuated radiation beam received at the detector array is dependent upon the attenuation of a radiation beam by the obj ect. Each detector element of the array produces a separate electrical signal that is a measurement of the beam attenuation at the detector location. The attenuation measurements from all the detectors are acquired separately to produce a transmission profile.

In some CT systems, the radiation source and the detector array are rotated with a gantry within the imaging plane and around the object to be imaged such that an angle at which the radiation beam intersects the object constantly changes. A group of radiation attenuation measurements, i.e., projection data, from the detector array at one gantry angle is referred to as a "view." A "scan" of the object includes a set of views made at different gantry angles, or view angles, during one revolution of the radiation source and detector. It is contemplated that the benefits of the methods described herein accrue to medical imaging modalities other than CT, so as used herein the term view is not limited to the use as described above with respect to projection data from one gantry angle. The term "view" is used to mean one data acquisition whenever there are multiple data acquisitions from different angles, whether from a CT, PET, or SPECT acquisition, and/or any other modality including modalities yet to be developed as well as combinations thereof in fused embodiments.

The projection data is processed to reconstruct an image that corresponds to a two-dimensional slice taken through the object. One method for reconstructing an image from a set of projection data is referred to in the art as the filtered backprojection technique. Transmission and emission tomography reconstruction techniques also include statistical iterative methods such as maximum likelihood expectation maximization (MLEM) and ordered-subsets expectation-reconstruction techniques as well as iterative reconstruction techniques. This process converts the attenuation measurements from a scan into integers called "CT numbers" or "Hounsfield units," which are used to control the brightness of a corresponding pixel on a display device.

To reduce the total scan time, a "helical" scan may be performed. To perform a "helical" scan, the patient is moved while the data for the prescribed number of slices is acquired. Such a system generates a single helix from a cone beam helical scan. The helix mapped out by the cone beam yields projection data from which images in each prescribed slice may be reconstructed.

As used herein, the phrase "reconstructing an image" is not intended to exclude embodiments of the present invention in which data representing an image is generated but a viewable image is not. Therefore, as used herein the term "image" broadly refers to both viewable images and data representing a viewable image. However, many embodiments generate (or are configured to generate) at least one viewable image.

FIG. 2 illustrates an exemplary imaging system 200 similar to the CT system 100 of FIG. 1. In accordance with aspects of the present disclosure, the imaging system 200 is configured for imaging a subject 204. In one embodiment, the imaging system 200 includes the detector array 108 (see FIG. 1). The detector array 108 further includes a plurality of detector elements 202 that together sense the x-ray beams 106 (see FIG. 1) that pass through a subject 204 such as a patient to acquire corresponding projection data. Accordingly, in one embodiment, the detector array 108 is fabricated in a multi-slice configuration including the plurality of rows of cells or detector elements 202. In such a configuration, one or more additional rows of the detector elements 202 are arranged in a parallel configuration for acquiring the projection data.

In certain embodiments, the imaging system 200 is configured to traverse different angular positions around the subject 204 for acquiring desired projection data. Accordingly, the gantry 102 and the components mounted thereon may be configured to rotate about a center of rotation 206 for acquiring the projection data, for example, at different energy levels. Alternatively, in embodiments where a projection angle relative to the subject 204 varies as a function of time, the mounted components may be configured to move along a general curve rather than along a segment of a circle.

As the x-ray source 104 and the detector array 108 rotate, the detector array 108 collects data of the attenuated x-ray beams. The data collected by the detector array 108 undergoes pre-processing and calibration to condition the data to represent the line integrals of the attenuation coefficients of the scanned subject 204. The processed data are commonly called projections.

In some examples, the individual detectors or detector elements 202 of the detector array 108 may comprise photon-counting detectors which register the interactions of individual photons into one or more energy bins. It should be appreciated that the methods described herein may also be implemented with energy-integrating detectors.

The acquired sets of projection data may be used for basis material decomposition (BMD). During BMD, the measured projections are converted to a set of material-density projections. The material-density projections may be reconstructed to form a pair or a set of material-density map or image of each respective basis material, such as bone, soft tissue, and/or contrast agent maps. The density maps or images may be, in turn, associated to form a volume rendering of the basis material, for example, bone, soft tissue, and/or contrast agent, in the imaged volume.

Once reconstructed, the basis material image produced by the imaging system 200 reveals internal features of the subject 204, expressed in the densities of the two basis materials. The density image may be displayed to show these features. In traditional approaches to diagnosis of medical conditions, such as disease states, and more generally of medical events, a radiologist or physician would consider a hard copy or display of the density image to discern characteristic features of interest. Such features might include lesions, sizes and shapes of particular anatomies or organs, and other features that would be discernable in the image based upon the skill and knowledge of the individual practitioner.

In one embodiment, the imaging system 200 includes a control mechanism 208 to control movement of the components such as rotation of the gantry 102 and the operation of the x-ray source 104. In certain embodiments, the control mechanism 208 further includes an x-ray controller 210 configured to provide power and timing signals to the x-ray source 104. Additionally, the control mechanism 208 includes a gantry motor controller 212 configured to control a rotational speed and/or position of the gantry 102 based on imaging requirements.

In certain embodiments, the control mechanism 208 further includes a data acquisition system (DAS) 214 configured to sample analog data received from the detector elements 202 and convert the analog data to digital signals for subsequent processing. The DAS 214 may be further configured to selectively aggregate analog data from a subset of the detector elements 202 into so-called macro-detectors, as described further herein. The data sampled and digitized by the DAS 214 is transmitted to a computer or computing device 216. In one example, the computing device 216 stores the data in a storage device 218. The storage device 218, for example, may include a hard disk drive, a floppy disk drive, a compact disk-read/write (CD-R/W) drive, a Digital Versatile Disc (DVD) drive, a flash drive, and/or a solid-state storage drive.

Additionally, the computing device 216 provides commands and parameters to one or more of the DAS 214, the x-ray controller 210, and the gantry motor controller 212 for controlling system operations such as data acquisition and/or processing. In certain embodiments, the computing device 216 controls system operations based on operator input. The computing device 216 receives the operator input, for example, including commands and/or scanning parameters via an operator console 220 operatively coupled to the computing device 216. The operator console 220 may include a keyboard (not shown) or a touchscreen to allow the operator to specify the commands and/or scanning parameters.

Although FIG. 2 illustrates only one operator console 220, more than one operator console may be coupled to the imaging system 200, for example, for inputting or outputting system parameters, requesting examinations, and/or viewing images. Further, in certain embodiments, the imaging system 200 may be coupled to multiple displays, printers, workstations, and/or similar devices located either locally or remotely, for example, within an institution or hospital, or in an entirely different location via one or more configurable wired and/or wireless networks such as the Internet and/or virtual private networks.

In one embodiment, for example, the imaging system 200 either includes or is coupled to a picture archiving and communications system (PACS) 224. In an exemplary implementation, the PACS 224 is further coupled to a remote system such as a radiology department information system, hospital information system, and/or to an internal or external network (not shown) to allow operators at different locations to supply commands and parameters and/or gain access to the image data.

The computing device 216 uses the operator-supplied and/or system-defined commands and parameters to operate a table motor controller 226, which in turn, may control a table 228 which may comprise a motorized table. Particularly, the table motor controller 226 moves the table 228 for appropriately positioning the subject 204 in the gantry 102 for acquiring projection data corresponding to the target volume of the subject 204.

As previously noted, the DAS 214 samples and digitizes the projection data acquired by the detector elements 202. Subsequently, an image reconstructor 230 uses the sampled and digitized x-ray data to perform high-speed reconstruction. Although FIG. 2 illustrates the image reconstructor 230 as a separate entity, in certain embodiments, the image reconstructor 230 may form part of the computing device 216. Alternatively, the image reconstructor 230 may be absent from the imaging system 200 and instead the computing device 216 may perform one or more functions of the image reconstructor 230. Moreover, the image reconstructor 230 may be located locally or remotely, and may be operatively connected to the imaging system 200 using a wired or wireless network. Particularly, one exemplary embodiment may use computing resources in a "cloud" network cluster for the image reconstructor 230.

In one embodiment, the image reconstructor 230 stores the images reconstructed in the storage device 218. Alternatively, the image reconstructor 230 transmits the reconstructed images to the computing device 216 for generating useful patient information for diagnosis and evaluation. In certain embodiments, the computing device 216 transmits the reconstructed images and/or the patient information to a display 232 communicatively coupled to the computing device 216 and/or the image reconstructor 230.

The various methods and processes described further herein may be stored as executable instructions in non-transitory memory on a computing device in imaging system 200. In one embodiment, image reconstructor 230 may include such executable instructions in non-transitory memory, and may apply the methods described herein to reconstruct an image from scanning data. In another embodiment, computing device 216 may include the instructions in non-transitory memory, and may apply the methods described herein, at least in part, to a reconstructed image after receiving the reconstructed image from image reconstructor 230. In yet another embodiment, the methods and processes described herein may be distributed across image reconstructor 230 and computing device 216.

In one embodiment, the display 232 allows the operator to evaluate the imaged anatomy. The display 232 may also allow the operator to select a volume of interest (VOI) and/or request patient information, for example, via a graphical user interface (GUI) for a subsequent scan or processing.

FIG. 3 shows a block diagram illustrating an example rendering engine 300 for visualizing anatomical structures according to an embodiment. The rendering engine 300 may be configured as instructions in non-transitory memory of the computing device 216, for example, executable by a processor of the computing device 216. The rendering engine 300 comprises a plurality of modules, such as a center line module 310, a segmentation module 320, a lighting module 330, a cut angle module 340, a mask module 350, and a mapping module 360.

The center line module 310 is configured to calculate or measure the position of a center line of an anatomical structure within a three-dimensional image volume. As an illustrative example, FIG. 4 shows a diagram 400 illustrating a center line 415 of an anatomical structure 410 such as a blood vessel. It should be appreciated that while the anatomical structure 410 is depicted as cylindrical or with a circular cross section, the shape of the anatomical structure 410 may vary along the length of the anatomical structure 410. The center line module 310 may determine the center line 415 of the anatomical structure 410 by measuring the radial distances from the walls of the anatomical structure 410, in some examples, and determining a set of points located in the center of the anatomical structure 410.

To assist the center line module 310 in identifying the center line of the anatomical structure, the segmentation module 320 is configured to segment structures or regions of the anatomical structure. For example, the segmentation module 320 may process the three-dimensional image data into segments. The segments of an anatomical structure such as a vessel may include one or more segments corresponding to the vessel wall, one or more segments corresponding to tissue, one or more segments corresponding to plaque, one or more segments corresponding to a lesion, and so on.

The lighting module 330 is configured to generate lighting. For example, the lighting module 330 may generate light and/or shadows within the three-dimensional image according to a selected light source position. In this way, the three-dimensionality of the chamfer cut in the anatomical structure may be visually emphasized.

The cut angle module 340 is configured to receive and adjust one or more cut angles for a cut mask. The cut angles may include at least a first cut angle and a second cut angle. The cut angles may be defined with respect to a coordinate system associated with the center line identified by the center line module 310. For example, with regard to FIG. 4, the cut angles may be defined with respect to a coordinate system 420 positioned at the center line 415 such that an axis, such as a vertical axis or a z-axis, for example, is aligned with the center line 415. The cut angles are therefore defined with respect to the center line. A mask module 350 may generate a cut mask, based on the cut angles from the cut angle module 340, to be applied to the anatomical structure in the three-dimensional image data. As an illustrative example, FIG. 5 shows a diagram 500 illustrating a cut mask 537 applied to the anatomical structure 410. A first cut angle 531 or a start angle is measured from an axis 530 aligned perpendicularly with the center line 415 of the anatomical structure 410. A second cut angle 533 is measured from either the axis 530 or from the first cut angle 531. The cut mask 537 thus comprises a volume defined by the first cut angle 531, the second cut angle 533, and the center line 415. Voxels of the anatomical structure 410 within the cut mask 537 are rendered as transparent, or at least partially transparent in some examples.

The rendering engine 300 further includes a mapping module 360 that determines the voxel values at the cut surfaces 535 of the anatomical structure, such that the cut surfaces 535 of the anatomical structure 410 may be visualized.

It should be appreciated that the rendering engine 300 may provide a two-dimensional rendering of a three-dimensional image volume, such that the three-dimensional image volume may be visualized on a two-dimensional display device, in some examples. Furthermore, it should be appreciated that in some examples, the rendering engine 300 may enable three-dimensional views of the three-dimensional image volume with chamfer cuts applied to one or more anatomical structures as described herein, wherein a user may view the three-dimensional views using virtual reality or augmented reality display devices, as illustrative examples.

FIG. 6 shows a block diagram 600 for standard volume rendering of an anatomical structure 610 according to an embodiment. To visualize the anatomical structure 610, the three-dimensional image data is mapped to a two-dimensional screen 630 such that a two-dimensional representation 640 of the three-dimensional anatomical structure 610 is represented according to a virtual view position 605. The surface of the anatomical structure 610 is mapped 625 to the two-dimensional screen 630 to create the two-dimensional representation 640 according to virtual rays 607 from the virtual view position 605 to the screen 630. Voxel information of the anatomical structure 610 along the rays 617 are not visualized in the two-dimensional representation 640.

To illustrate standard volume rendering of a vessel, FIG. 7 shows an example image 700 of a vessel 702 including a bifurcation 730 with volume rendering. The image 700 corresponds to a two-dimensional representation, such as the two-dimensional representation 640, of a three-dimensional object, such as the anatomical structure 610. In the image 700 of the vessel 702, only the exterior surface 720 of the vessel 702 is visible. In this representation, details of the interior of the vessel 702 are not visualized.

As mentioned above, a cut mask may be applied to visualize or render the interior of the vessel 702. To that end, FIG. 8 shows a block diagram 800 for volume rendering of an anatomical structure 810 with a cutaway view according to an embodiment. Here, the cut surfaces 812 of the anatomical structure 810 are mapped to the screen 830 based on the virtual rays 807 to render a two-dimensional representation 840 of the anatomical structure 810 as viewed from a virtual view position 805. Voxel information along the rays 817 within the anatomical structure 810 are not depicted in the two-dimensional representation 840. Nevertheless, a user viewing the image corresponding to the two-dimensional representation 840 on a screen 830 may view the interior of the anatomical structure 810 along the cut surfaces 812. The cut surfaces 812 are established by a cut mask such as the cut mask 537, which are defined by the two cut angles 531 and 533. Further, as depicted, the cut mask is oriented toward the virtual view position 805 such that the cut surfaces are visible. If the virtual view position 805 is adjusted to another position relative to the anatomical structure 810, the cut mask may be adjusted such that the plane or axis 530 described hereinabove, for example, is perpendicular to the virtual rays 807.

FIG. 9 shows an example image 900 of a vessel 902 with a cut mask applied according to an embodiment. Unlike the image 700 described hereinabove, wherein only the exterior surface 720 of the vessel 702 was visible, the interior of the vessel 902 is visible in the image 900 due to the application of a cut mask as described herein. Further, as the cut mask is applied based on the cut angles and the center line of the vessel 902 with respect to the view position, an exterior surface 910 of the vessel 902 is still visible in 900. Further, the image 900 depicts an interior 917 of the vessel 902, as well as tissue 915 and plaque 920 present within the interior 917 of the vessel 902. Further, it should be appreciated that the cut mask as described herein is applicable along the center line of the vessel 902, which is not necessarily linear as suggested by FIG. 4 but instead tracks the shape of the vessel 902 along its length. Further, in this way, the interior 917 of the vessel 902 at the bifurcation 940 of the vessel 902 is also visible.

FIG. 10 shows an example image 1000 of a vessel 1002 with a cut mask applied to depict an interior of the vessel 1002. Due to the application of a cut mask to the vessel 1002, tissue 1015 and plaque 1020 within the vessel 1002 is visible in the image 1000. In this way, a user may observe the relation between the vessel wall 1010, the plaque 1020, and the tissue 1015 along the vessel 1002. As depicted, a light source (not shown) causes shadows to be visible within the image 1000, for example along portions of the plaque 1020 and the vessel wall 1010. The position of the light source relative to the vessel 1002 may be adjusted to further appreciate the three-dimensionality of the image 1000.

Another option for visualizing the interior of the vessel may include rendering the image with Hounsfield units. FIG. 11 shows an example image 1100 of a vessel 1102 rendered with Hounsfield units and with a cut mask applied to depict an interior of the vessel 1102. The tissue 1115 is rendered according to a first Hounsfield unit, the plaque 1120 is rendered according to a second Hounsfield unit, and the vessel wall 1110 is rendered according to a third Hounsfield unit, such that the three elements of the vessel 1102 are easily distinguishable in the image 1100.

FIG. 12 shows a high-level flow chart illustrating an example method 1200 for visualizing interiors of an anatomical structure according to an embodiment. In particular, method 1200 relates to rendering anatomical structures with selective cutaway views. Method 1200 is described with regard to the systems and components of FIGS. 1-3, though it should be appreciated that the method 1200 may be implemented with other systems and components without departing from the scope of the present disclosure. Method 1200 may be implemented as instructions in non-transitory memory that are executable by a processor, such as the memory and processor of the computing device 216 of the imaging system 200.

Method 1200 begins at 1205. At 1205, method 1200 loads and displays 3D image data. The 3D image data may comprise, as illustrative and non-limiting examples, CT image data acquired with an imaging system such as the CT system 100 or the imaging system 200, ultrasound image data acquired with an ultrasound imaging system, PET image data acquired with a positron emission tomography (PET) imaging system, or other three-dimensional image data acquired with a different medical imaging modality. The 3D image data is displayed, for example, via a display device 232. It should be appreciated that the 3D image data may alternatively be displayed via an augmented reality display device or a virtual reality display device, in some examples.

At 1210, method 1200 identifies a vessel in the 3D image data. Method 1200 may automatically identify the vessel in the 3D image data, or method 1200 may receive an indication from a user, for example via a user interface such as an operator console 220, of the vessel in the 3D image data.

At 1215, method 1200 determines a view position. The view position corresponds to a position from which the vessel identified at 1210 is currently being displayed. The view position may include a distance of the vessel to the view position, as well as an orientation of the view position relative to the vessel.

At 1220, method 1200 determines a center line of the vessel. To that end, method 1200 may segment the vessel, for example via the segmentation module 320, and then measure the distances between the segmented vessel walls to determine, via the center line module 310, the center line of the vessel along a length of the vessel.

At 1225, method 1200 determines cut angles for a cut mask. In some examples, the cut angles may be predetermined or comprise default cut angles. In other examples, method 1200 may receive cut angles input by the user, for example via the operator console 220. The cut angles includes at least a first cut angle and a second cut angle. At 1230, method 1200 generates the cut mask based on the cut angles and the center line.

At 1235, method 1200 applies the cut mask to the 3D image data based on the view position. For example, the cut mask is applied to the vessel in the 3D image data such that the cut mask is oriented towards the view position. To that end, the first cut angle may be measured from a plane or axis that is perpendicular to the viewing direction from the view position as described hereinabove. At 1240, method 1200 displays the 3D image data with the cut mask applied to the vessel. The interior surface of the anatomical structure along the cut surfaces or at the boundary of the cut mask are displayed, and may be visualized according to voxel intensity of the 3D image data along the cut surfaces. Further, based on the orientation of the anatomical structure with respect to the view position, both the interior surfaces defined by the chamfer cut mask and the exterior surface of the anatomical structure may be displayed to the user. With the cut mask applied to the 3D image data, the anatomical structure when displayed appears to the user as though a chamfer cut has been applied to the anatomical structure, such that the user may observe the interior of the anatomical structure with respect to the exterior of the anatomical structure in a three-dimensional representation.

At 1245, method 1200 determines whether input regarding opacity of the cut mask is received. For example, the user may input a different desired opacity or transparency of the cut mask. If such input is received ("YES"), method 1200 continues to 1250. At 1250, method 1200 updates the opacity of the region based on the input received at 1245, and displays the 3D image data with the updated opacity. In this way, the user may increase or decrease the opacity of voxels within the cut mask, and therefore may visualize the relation of structures viewable along the cut surfaces with respect to structures within the region of the cut mask.

After updating the opacity at 1250, or if input regarding opacity was not received ("NO") at 1245, method 1200 continues to 1255. At 1255, method 1200 determines whether input regarding the cut angles is received. For example, the user may select one or more adjustments to the cut angles in order to change the size or range of the cut mask. If such input is received ("YES"), method 1200 continues to 1260. At 1260, method 1200 updates the cut mask based on the input received at 1255. At 1265, method 1200 updates the display with the updated cut mask.

After updating the display with the updated cut mask at 1265, or if an input regarding cut angles was not received ("NO") at 1255, method 1200 continues to 1270. At 1270, method 1200 determines whether a new view position is received. For example, the user may zoom in, zoom out, rotate the image, and so on, and such actions indicate a new view position. If a new view position is received ("YES"), method 1200 continues to 1275. At 1275, method 1200 updates the display of the 3D image data at the new view position with the cut mask adjusted for the new view position. For example, if the user rotates the image such that the vessel is viewable from a different position or orientation, the cut mask is updated so that the user may view the interior of the vessel from the different position or orientation.

After updating the display at 1275, or if a new view position was not received ("NO") at 1270, method 1200 continues to 1280. At 1280, method 1200 outputs the display with the masked vessel. The display with the masked vessel may be saved as an image in memory, for example, for later review. Method 1200 then returns.

Thus, systems and methods are provided that enable the realistic three-dimensional rendering of vessels with chamfer cuts applied to the vessels. In this way, the vessel may be visualized from the inner layer to the outer layer of the vessel, in a manner that simulates a longitudinal dissection of the vessel. Further, pathologies such as plaque or lesions positioned with an anatomical structure such as a vessel may be visualized in three dimensions with respect to their surrounding tissue, without distortion. The visualization is further adjustable to account for zoom, for more or less immersion, as well as adjustments to the angle of the chamfer cut, and rotation of the chamfer cut. The visualization follows the natural shape of the vessel, can show multiple vessels, and may depict both the outer lumen and the inner lesions.

A technical effect of the disclosure includes the display of an anatomical structure with a portion of the anatomical structure selectively cut away. Another technical effect of the disclosure includes the three-dimensional visualization of an interior of a vessel from three-dimensional data acquired with a medical imaging modality. Yet another technical effect of the disclosure includes the updating of a displayed vessel with a cutaway portion responsive to user inputs.

In one embodiment, a method comprises acquiring three-dimensional image data with a three-dimensional imaging modality, generating an image of an anatomical structure within the three-dimensional image data with an angled portion of the anatomical structure rendered as at least partially transparent in the image, and displaying, via a display device, the image to a user.

In a first example of the method, the method further comprises determining a center line of the anatomical structure within the three-dimensional image data, and determining the angled portion of the anatomical structure with respect to the center line, for example at each point along the center line. In a second example of the method optionally including the first example, the method further comprises determining a first cut angle and a second cut angle defined continuously along the center line, wherein the angled portion of the anatomical structure is defined by the first cut angle and the second cut angle as a chamfer cut in the anatomical structure. In a third example of the method optionally including one or more of the first and second examples, generating the image of the anatomical structure comprises generating a cut mask based on the first cut angle and the second cut angle, and applying the cut mask to the anatomical structure within the three-dimensional image data. In a fourth example of the method optionally including one or more of the first through third examples, the method further comprises adjusting an opacity of the cut mask responsive to user input, and updating the image displayed with the adjusted opacity applied to the angled portion. In a fifth example of the method optionally including one or more of the first through fourth examples, the method further comprises receiving user adjustments to one or more of the first cut angle and the second cut angle, adjusting the cut mask based on the user adjustments, and updating the image displayed with the adjusted cut mask applied to the anatomical structure. In a sixth example of the method optionally including one or more of the first through fifth examples, interior surfaces of the anatomical structure and an exterior surface of the anatomical structure are visualized in the image. The interior surface and exterior surface may be visualized, for example, based on an intensity-based opacity. In a seventh example of the method optionally including one or more of the first through sixth examples, the method further comprises generating shadows in the interior surfaces for the image according to a virtual light source positioned with respect to the anatomical structure. In an eighth example of the method optionally including one or more of the first through seventh examples, the method further comprises receiving an adjustment to a viewing position relative to the anatomical structure, and updating the image with a new angled portion of the anatomical structure rendered as at least partially transparent in the image based on the adjustment to the viewing position. In a ninth example of the method optionally including one or more of the first through eighth examples, the anatomical structure comprises a vessel or tubular structure. In a tenth example of the method optionally including one or more of the first through ninth examples, the three-dimensional imaging modality comprises a computed tomography imaging system, and the three-dimensional image data comprises computed tomography image data.

In another embodiment, a method comprises acquiring, via a medical imaging modality, three-dimensional image data, identifying an anatomical structure within the three-dimensional image data, determining a center line of the anatomical structure, generating a chamfer cut mask for the anatomical structure based on a first cut angle and a second cut angle extending to the center line, and displaying the three-dimensional image data with the chamfer cut mask applied to the anatomical structure within the three-dimensional image data, wherein voxels within the chamfer cut mask are transparent.

In a first example of the method, the method further comprises determining a view position for viewing the anatomical structure within the three-dimensional image data, wherein the first cut angle and the second cut angle are relative to a plane extending through the center line and perpendicular to a ray extending from the view position to the center line. In a second example of the method optionally including the first example, the method further comprises adjusting one or more of the first cut angle, the second cut angle, and a transparency of the voxels within the chamfer cut mask responsive to user input.

In yet another embodiment, a system comprises a medical imaging modality configured to acquire three-dimensional image data of an interior region of a subject, a display device, and a processor communicatively coupled to the medical imaging modality and the display device, and configured with instructions in non-transitory memory that when executed cause the processor to: acquire, via the medical imaging modality, the three-dimensional image data; generate an image of an anatomical structure within the three-dimensional image data with an angled portion of the anatomical structure rendered as at least partially transparent in the image; and display, via the display device, the image to a user.

In a first example of the system, the processor is further configured with instructions in non-transitory memory that when executed cause the processor to determine a center line of the anatomical structure within the three-dimensional image data, and determine the angled portion of the anatomical structure with respect to the center line. In a second example of the system optionally including the first example, the processor is further configured with instructions in non-transitory memory that when executed cause the processor to determine a first cut angle and a second cut angle, wherein the angled portion of the anatomical structure is defined by the first cut angle and the second cut angle. In a third example of the system optionally including one or more of the first and second examples, the processor is further configured with instructions in non-transitory memory that when executed cause the processor to: generate a cut mask based on the first cut angle and the second cut angle, and apply the cut mask to the anatomical structure within the three-dimensional image data to generate the image of the anatomical structure. In a fourth example of the system optionally including one or more of the first through third examples, the system further comprises an operator console communicatively coupled to the processor, wherein the processor is further configured with instructions in non-transitory memory that when executed cause the processor to receive, via the operator console, user input regarding an opacity of the cut mask, adjust the opacity of the cut mask responsive to the user input, and update the image displayed with the adjusted opacity applied to the angled portion. In a fifth example of the method optionally including one or more of the first through fourth examples, the processor is further configured with instructions in non-transitory memory that when executed cause the processor to: receive, via the operator console, user adjustments to one or more of the first cut angle and the second cut angle, adjust the cut mask based on the user adjustments, and update the image displayed with the adjusted cut mask applied to the anatomical structure.

As used herein, an element or step recited in the singular and proceeded with the word "a" or "an" should be understood as not excluding plural of said elements or steps, unless such exclusion is explicitly stated. Furthermore, references to "one embodiment" of the present invention are not intended to be interpreted as excluding the existence of additional embodiments that also incorporate the recited features. Moreover, unless explicitly stated to the contrary, embodiments "comprising," "including," or "having" an element or a plurality of elements having a particular property may include additional such elements not having that property. The terms "including" and "in which" are used as the plain-language equivalents of the respective terms "comprising" and "wherein." Moreover, the terms "first," "second," and "third," etc. are used merely as labels, and are not intended to impose numerical requirements or a particular positional order on their objects.

This written description uses examples to disclose the invention, including the best mode, and also to enable a person of ordinary skill in the relevant art to practice the invention, including making and using any devices or systems and performing any incorporated methods. Although the examples provided herein are related to medical application, the scope of the present disclosure covers non-destructive testing in industrial, biomedical, and other fields. The patentable scope of the invention is defined by the claims, and may include other examples that occur to those of ordinary skill in the art. Such other examples are intended to be within the scope of the claims if they have structural elements that do not differ from the literal language of the claims, or if they include equivalent structural elements with insubstantial differences from the literal languages of the claims.

## Claims

1. A method, comprising:
acquiring (1205) three-dimensional image data with a three-dimensional imaging modality;
generating (1235) an image of an anatomical structure within the three-dimensional image data with an angled portion of the anatomical structure rendered as at least partially transparent in the image; and
displaying (1240), via a display device, the image to a user.

2. The method of claim 1, further comprising determining (1220) a center line of the anatomical structure within the three-dimensional image data, and determining the angled portion of the anatomical structure for each point along the center line.

3. The method of claim 2, further comprising determining (1225) a first cut angle and a second cut angle defined continuously along the center line, wherein the angled portion of the anatomical structure is defined by the first cut angle and the second cut angle as a chamfer cut in the anatomical structure.

4. The method of claim 3, wherein generating the image of the anatomical structure comprises generating (1230) a cut mask based on the first cut angle and the second cut angle, and applying the cut mask to the anatomical structure within the three-dimensional image data.

5. The method of claim 4, further comprising adjusting (1250) an opacity of the cut mask responsive to user input, and updating the image displayed with the adjusted opacity applied to the angled portion.

6. The method of claim 4, further comprising receiving user adjustments to one or more of the first cut angle and the second cut angle, adjusting (1260) the cut mask based on the user adjustments, and updating (1265) the image displayed with the adjusted cut mask applied to the anatomical structure.

7. The method of claim 1, wherein interior surfaces of the anatomical structure and an exterior surface of the anatomical structure are visualized in the image based on an intensity-based opacity.

8. The method of claim 7, further comprising generating shadows in the interior surfaces for the image according to a virtual light source positioned with respect to the anatomical structure.

9. The method of claim 1, further comprising receiving an adjustment to a viewing position relative to the anatomical structure, and updating (1275) the image with a new angled portion of the anatomical structure rendered as at least partially transparent in the image based on the adjustment to the viewing position.

10. The method of claim 1, wherein the anatomical structure comprises a vessel or tubular structure, wherein the three-dimensional imaging modality comprises a computed tomography imaging system, and wherein the three-dimensional image data comprises computed tomography image data.

11. A system, comprising:
a medical imaging modality (100, 200) configured to acquire three-dimensional image data of an interior region of a subject;
a display device (232); and
a processor (216) communicatively coupled to the medical imaging modality and the display device, and configured with instructions in non-transitory memory that when executed cause the processor to:
acquire (1205), via the medical imaging modality, the three-dimensional image data;
generate (1235) an image of an anatomical structure within the three-dimensional image data with an angled portion of the anatomical structure rendered as at least partially transparent in the image; and
display (1240), via the display device, the image to a user.

12. The system of claim 11, wherein the processor is further configured with instructions in non-transitory memory that when executed cause the processor to: determine (1220) a center line of the anatomical structure within the three-dimensional image data, and determine the angled portion of the anatomical structure with respect to the center line.

13. The system of claim 11, wherein the processor is further configured with instructions in non-transitory memory that when executed cause the processor to: determine (1225) a first cut angle and a second cut angle, wherein the angled portion of the anatomical structure is defined by the first cut angle and the second cut angle, generate (1230) a cut mask based on the first cut angle and the second cut angle, and apply (1235) the cut mask to the anatomical structure within the three-dimensional image data to generate the image of the anatomical structure.

14. The system of claim 13, further comprising an operator console communicatively coupled to the processor, wherein the processor is further configured with instructions in non-transitory memory that when executed cause the processor to: receive, via the operator console, user input regarding an opacity of the cut mask, adjust (1250) the opacity of the cut mask responsive to the user input, and update the image displayed with the adjusted opacity applied to the angled portion.

15. The system of claim 14, wherein the processor is further configured with instructions in non-transitory memory that when executed cause the processor to: receive, via the operator console, user adjustments to one or more of the first cut angle and the second cut angle, adjust (1260) the cut mask based on the user adjustments, and update (1265) the image displayed with the adjusted cut mask applied to the anatomical structure.
